# EUROPEAN PATENT SPECIFICATION

(11) **EP 2 274 553 B1**
(45) Date of publication and mention of the grant of the patent: **25.01.2012**
(21) Application number: 09742553.2
(22) Date of filing: 08.05.2009
(51) Int. Cl.: F17C 5/00, F17C 13/02, G01N 21/90

(54) **A CONTROL SYSTEM**
STEUERUNGSSYSTEM
SYSTÈME DE CONTRÔLE

(30) Priority: 09.05.2008 TR 200803303
(43) Date of publication of application: 19.01.2011
(73) Proprietor: Aygaz Anonim Sirketi, Istanbul (TR)
(72) Inventor: KURUTEPE, Sahin, Istanbul (TR); ISBILEN, Emrah, Istanbul (TR)
(74) Representative: Dericioglu, E. Korhan
(86) International application number: PCT/IB2009/051898
(87) International publication number: WO 2009/136380

(56) References cited:
- EP-A1- 0 034 098
- EP-A1- 0 534 876
- EP-A1- 0 813 022
- EP-A1- 1 897 848
- WO-A2-2006/101944
- DE-A1- 3 214 629
- FR-A1- 2 637 084
- JP-A- 8 145 922
- US-A1- 2005 023 468

## Description

### Field of the Invention

The present invention relates to a control system which enables performing paint and deformation controls, which are realized manually in gas cylinder production lines and thus are error-prone, automatically without using any manpower.

### Prior Art

Transportation of liquefied petroleum gas (LPG) or other hydrocarbons used at homes and workplaces is realized by means of gas cylinders. The said gas cylinders should be produced in a rather safe manner since they contain explosive gas. Even a very small fault made during production may cause the faulty gas cylinder to lead to loss of life and property. According to the application known in the art, control of the surface paint levels is carried out visually by an operator. This shows that there might be problems encountered in paint control that might arise from human faults. In the state of the art, in case of a possible fault of an operator during gas cylinder deformation and paint controls carried out as the line proceeds; cylinders that should not be sent to scrap or painting can be delivered to repair or paint departments and this situation causes additional cost and loss of time. In an opposite case, gas cylinders that do not comply with the standards might be given to a person who will use the cylinder. "A Control System" is provided for eliminating such faults.

The French patent document No. FR2637084 discloses a system which can determine the surface conditions of gas cylinders. In this technique, images of the gas cylinders are recorded via a camera and later a condition control is performed taking as reference a recording made previously. However the said document does not mention a system which analyzes condition of the outer paint of the gas cylinders. Furthermore, the French patent document No. FR2637084 does not disclose what will be done in case analysis results are negative.

Japanese patent document No. JP8145922 discloses a technique which analyzes paint condition. In this technique, the painted and coated surface is heated, the heated surface is recorded by a camera, and thermal analysis is performed. Thus a condition analysis is carried out. There is not a system in the said document which performs a deformation analysis.

The European patent document EP0534876 discloses a method and a system for filling liquefied gas cylinders and controlling the weight of them after filling. The said system basically comprises a weighing unit and a programmable control unit connected to the said weighing unit.

The International patent document WO2006101944 discloses an apparatus and method for remote inspection of industrial gas containers (cylinders).

As can be seen from the above mentioned patent documents, recording images by a camera when the gas cylinder is rotating and analyzing these images are present in the state of the art. However, the French patent document No. FR2637084 mentions that analysis of the images recorded is carried out by comparing two pictures. It does not seem possible to determine the size of the deformation on the gas cylinder by means of the invention disclosed in the French patent document No. FR2637084. Additionally, the French patent document No. FR2637084 does not disclose what shall be done to the gas cylinders with a bad surface quality.

### Summary of the Invention

The objective of the present invention is to realize a control system by which, during production of gas cylinders used for transportation of liquefied petroleum gas or other hydrocarbons, compliance of the gas cylinder surfaces with the deformation and paint standards and customer requirements is controlled automatically by means of a computer controlled system while the gas cylinders are still on the production line.

Another objective of the invention is to realize a control system which eliminates human faults during tests by carrying out the controls for deformation and paint standards on the gas cylinder surfaces via a computer.

A further objective of the invention is to realize a control system which shortens the gas cylinder production and test time by carrying out deformation and paint tests on the same line during production of the gas cylinders.

### Detailed Description of the Invention

The control system realized to fulfill the objective of the present invention is illustrated in the accompanying figures in which,

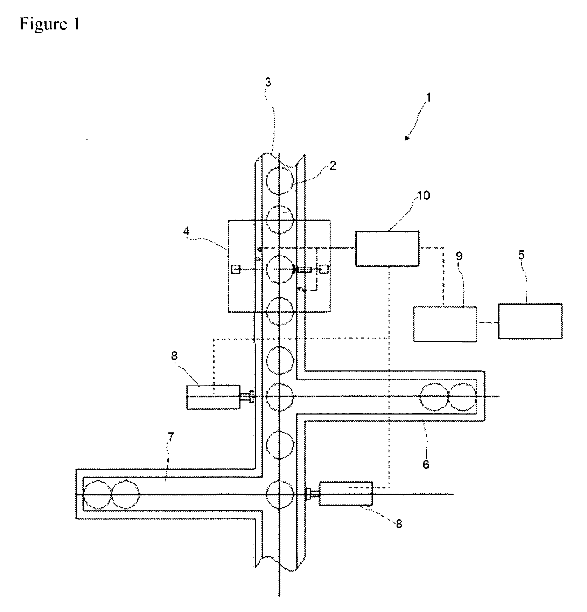

Figure 1 is the schematic view of a control system.

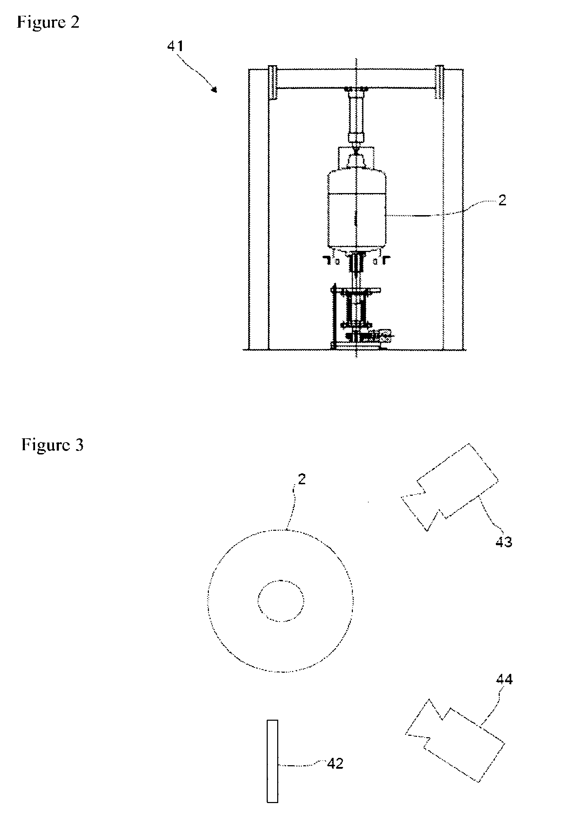

Figure 2 is the perspective view of the rotation mechanism provided in a control system.
Figure 3 is the inner view of the control station located in a control system.

The components shown in the figures are numbered as follows:
1. Control system
2. Gas cylinder
3. Conveyor
4. Control station
   41. Rotation mechanism
   42. Laser
   43. Deformation camera
   44. Paint camera
5. Controller
6. Scrap and repair separation line
7. Paint separation line
8. Separation group
9. Communication circuit
10. Control board

The control system (1) comprises at least one conveyor line (3), on which the gas cylinders (2) that enable transportation of liquefied petroleum gas (LPG) or other hydrocarbons is produced,
at least one control station (4) which is provided on the conveyor line (3) and where the paint and deformation tests of the produced gas cylinders (2) are conducted,
a controller (5) which compares the measurement results obtained from the control station (4) with the results disclosed in the standards and input to its memory in advance,
at least one scrap and repair separation line (6) where gas cylinders (2) determined to be damaged according to the results provided by the controller (5) are separated, and the ones which are irrepairable are designated as scrap, and the repairable ones are repaired,
at least one paint separation line (7) where, gas cylinders (2) that do not meet the surface paint standards according to the results provided by the controller (5) are forwarded for being repainted,
at least two separation groups (8) which are in connection with the controller (5) and which ensure that the gas cylinders (2) determined according to the results provided therefrom are sent to the scrap and repair separation line (6) or paint separation line (7),
a communication circuit (9) which enables the communication between the control station (4), controller (5) and the separation groups (8), and
a control board (10) used by the operator for monitoring the performed processes, viewing the control results and managing the line via computer.

In the inventive control system (1), control of the deformation and paint levels of gas cylinders (2) are performed at the control station (4) located on the conveyor (3) line. The control station (4) comprises a rotation mechanism (41) which performs the operations of gripping and rotating the gas cylinder (2) on the line, a laser (42) for forming a gas cylinder profile and obtaining an accurate image during rotation of the gas cylinder for determining the deformations, at least one deformation camera (43) which records images during rotation in order to be able to decide on the deformation condition and sends these images to the controller (5) via the communication circuit (9), and at least one paint camera (44) which records images during rotation in order to be able to decide on the paint condition and sends these images to the controller (5) via the communication circuit (9).

In the inventive control system (1), the gas cylinders (2) coming via the conveyor (3) enter into the control station (4) for finding out whether or not they comply with the required standards. The laser beam applied on the gas cylinder (2) while the gas cylinder (2) is being rotated upon entering the control station (4), follows the deformation on the crushed part of the gas cylinder (2). During the said rotation, images of the laser (42) are recorded by the deformation camera (43) from different points and are transferred to the controller (5). The images taken to the controller (5) are added consecutively and thus the deformation map of the entire gas cylinder (2) surface is formed and the deformation amount on the gas cylinder (2) is measured. As a result of the values measured, in accordance with the standards and tolerances specified, gas cylinders (2) are allowed to be separated for scrap or repair.

Additionally, as the gas cylinder (2) is being rotated, the paint camera (44) also records images and transfers these images to the controller (5). Surfaces which differ from the standard paint are determined according to the images transferred to the controller (5) and the gas cylinders (2) whose surfaces differ from the predetermined levels are automatically directed to the paint separation line (7). This way, the deformation and paint control process which was performed visually by an operator in the prior art is carried out in a computer controlled manner and more reliable results are obtained.

In the inventive control system (1), processes of gripping and rotation of the gas cylinder (2) on the line within the control station (4) are performed by means of a rotation mechanism (41). In order for carrying out this process in a proper manner, rotation should be performed precisely from the center of the gas cylinder (2). Otherwise the gas cylinder (2) may rotate with oscillation or might not be able to complete a tour. Then, it might be the case that the cameras (43, 44) can not transfer precisely accurate images to the controller (5), and the controller (5) may make a wrong analysis.

In the inventive control system (1), in other embodiments of the invention, the rotation mechanism (41) provided within the control station (4) rotates the paint and deformation cameras (43, 44) which record images or a mirror group that faces the gas cylinder surface, instead of the gas cylinder (2).

In the inventive control system (1), separation of the gas cylinders which are not suitable according to the decision of the controller (5) is performed by the separation group. While separation of the gas cylinders (2) can be performed in many different ways, in the present embodiment, pneumatic separation group is preferred due to inflammable-explosive environment.

In the inventive control system (1), deformation of the laser beam applied on the gas cylinder (2) during rotation thereof is recorded by the deformation camera (43) and deformation amount is measured via the images sent to the controller (5). In different embodiments of the invention, deformations can be determined by directing on the surface of the gas cylinder, different types of lights such as LED, fluorescent, fiber-optic distributed halogene light or light patterns, instead of laser.

In the inventive control system (1), in order for the cylindrical gas cylinder (2) surface to be recorded at a very short period of time, the gas cylinder (2) or the camera-laser group (42, 43, 44) should be rotated. In the system formed, the gas cylinder (2) is rotated by about 400 degrees by means of a pneumatic system. In another embodiment of the invention, rotation can be performed by a system with an electrical motor instead of a pneumatic system.

In the inventive control system (1), signals are used for monitoring the flow of the gas cylinders (2) on the conveyor (3) line and stoppers are used for managing the line. In the present control system (1), photocell and pneumatic sensors are used while different kinds of sensors can also be used. Since the line has an inflammable-explosive character, preferably pneumatic stoppers are used for directing the line.

Since all the electrical equipments provided in the inventive control system (1) carry out their functions in an inflammable-explosive environment, they should be explosion proof.

Within the scope of this basic concept, it is possible to develop various embodiments the inventive "A Control System (1)". The invention can not be limited to the examples provided herein and it is essentially according to the claims.

## Claims

1. A control system (1) comprising at least one conveyor line (3), on which the gas cylinders (2) that enable transportation of liquefied petroleum gas (LPG) or other hydrocarbons is produced,
at least one control station (4) which is provided on the conveyor line (3) and where the paint and deformation tests of the produced gas cylinders (2) are conducted
a controller (5) which compares the measurement results of the deformation and paint control on the surface of the gas cylinder (2) with the results disclosed in the standards and input to its memory in advance,
at least one scrap and repair separation line (6) where gas cylinders determined to be damaged according to the results provided by the controller (5) are separated, and the ones which are irrepairable are designated as scrap, and the repairable ones are repaired,
at least one paint separation line (7) where, gas cylinders that do not meet the surface paint standards according to the results provided by the controller (5) are forwarded for being repainted,
at least two separation groups (8) which are in connection with the controller (5) and which ensure that the gas cylinders determined according to the results provided therefrom are sent to the scrap and repair separation line (6) or paint separation line (7),
a communication circuit (9) which enables the communication between the controller (5) and the separation groups (8), and
a control board (10) used by the operator for monitoring the performed processes, viewing the control results and managing the line via computer and **characterized by** at least one control station (4) having
a rotation mechanism (41) which performs the operations of gripping and rotating the gas cylinder (2) on the line,
a laser (42) whose light is projected on the cylinder (2) and which follows the surface of the cylinder (2) during rotation of the gas cylinder (2) for determining the deformations,
at least one deformation camera (43) which records images of the laser at different points during rotation in order to be able to decide on the deformation condition and sends these images to the controller (5) via the communication circuit (9),
at least one paint camera (44) which records images during rotation in order to be able to decide on the paint condition and sends these images to the controller (5) via the communication circuit (9).

2. A control system (1) according to Claim 1, **characterized by** at least one communication circuit (9) which provides communication between the control station (4) and the controller (5).

3. A control system (1) according to any of the preceding claims, **characterized by** LED, fluorescent, fiber-optic distributed halogene light that can be used in place of laser (42) in the control station (4).

4. A control system (1) according to any of the preceding claims, **characterized by** at least one rotation mechanism (41) which enables the
entire outer surface of the gas cylinder (2) to be recorded by rotating the camera-laser group (42, 43, 44) while the gas cylinder (2) moves at a fixed position on the conveyor (3).

5. A control system (1) according to any of the preceding claims, **characterized by** a controller (5) which adds the images that it receives from the deformation camera consecutively and measures the amount of deformation on the gas cylinder (2).

## Patentansprüche

1. Ein Steuersystem (1) umfassend mindestens eine Förderstrecke (Förderband) (3), auf der die Druckgasbehälter (Gaszylinder) (2) produziert werden, welche die Beförderung von flüssigem Propangas (LPG) oder übrigen Kohlenwasserstoffen ermöglichen,
mindestens eine Leitstelle (4), die auf der Förderstrecke (3) zur Verfügung gestellt ist und wo die Deformationsprüfungen der produzierten Gaszylindern (2) durchgeführt werden,
einen Regler (5), der die Messergebnisse zur Deformation (Verformung) und Lackierungskontrolle auf der Oberfläche des Gaszylinders (2) mit den in den Standards beschriebenen und vorab in seinen Speicher eingetragenen Ergebnissen umfasst,
mindestens eine Abfall- und Reparatur-Abtrennstrecke (6), wo die Gaszylinder abgetrennt werden, die nach den durch den Regler (5) erfassten Ergebnissen zerstört werden sollten und diejenigen, welche nicht reparierbar sind, als Abfall gekennzeichnet und diejenigen, welche reparierbar sind, repariert werden,
mindestens eine Lackierung-Abtrennstrecke (7), wo die Gaszylinder, die nach den durch den Regler (5) bereitgestellten Ergebnissen den Anforderungen für Oberflächenlackierung nicht gerecht sind, zur Lackierung weitergeleitet werden,
mindestens zwei Gruppen (8) zur Abtrennung, welche in Verbindung mit dem Regler (5) stehen und sicherstellen, dass die Gaszylinder, welche nach den dadurch erfassten Ergebnissen bestimmt sind, zur Abfall- und Reparatur-Abtrennstrecke (5) bzw. zur Lackierungs-Abtrennstrecke (7) befördert werden, eine Kommunikationsschaltung (9), die den Informationsfluss zwischen dem Regler (5) und den abtrennenden Gruppen (8) ermöglicht, und
eine Bedienungstafel (10), die durch den Bediener zur Beobachtung von ausgeführten Prozessen, von Bedienungsergebnissen sowie zur Beaufsichtigung der Leitung über computer verwendet wird.
und **gekennzeichnet durch** mindestens eine Leitstelle (4), die aufweist
einen Rotationsmechanismus (41), welcher die Arbeitsvorgänge für Einspannung und Umdrehung von Gaszylindern (2) auf der Förderstrecke verrichtet,
einen Laser (42), dessen Licht auf den Gaszylinder (2) gestrahlt wird und welches während der Umdrehung des Gaszylinders (2) zur Bestimmung von Verformungen die Oberfläche des Gaszylinders (2) verfolgt,
mindestens eine Deformationskamera (43), die während der Umdrehung Bildaufnahmen von Laser an unterschiedlichen Stellen vornimmt, um den Verformungsstand bestimmen zu können und diese Bilder über die Kommunikationsschaltung (9) zum Regler (5) liefert,
mindestens eine Lackierungskamera (44), die während der Umdrehung an unterschiedlichen Stellen Bildaufnahmen von Laser vornimmt, um den Lackierungsstand bestimmen zu können und diese Bilder über die Kommunikationsschaltung (9) zum Regler (5) liefert,

2. Ein Steuersystem (1) nach Anspruch 1, **gekennzeichnet durch** mindestens eine Kommunikationsschaltung (9), die den Informationsfluss zwischen der Leitstelle (4) und dem Regler (5) ermöglicht,

3. Ein Steuersystem (1) nach einem der vorstehenden Ansprüche, **gekennzeichnet durch** LED, Fluoreszenz, faseroptisch verstreutes Halogenlicht, die an der Leitstelle (4) anstelle von Laser (42) eingesetzt werden können.

4. Ein Steuersystem (1) nach einem der vorstehenden Ansprüche, **gekennzeichnet durch** mindestens einen Rotationsmechanismus (41), welcher die Aufnahme der gesamten Oberfläche des Gaszylinders (2) **durch** Umdrehung der Kamera-Laser-Gruppe (42, 43, 44) ermöglicht, indem der Gaszylinder (2) sich an einer festen Position auf dem Förderband (3) bewegt,

5. Ein Steuersystem (1) nach einem der vorstehenden Ansprüche, **gekennzeichnet durch** einen Regler (5), der die Bilder hintereinander hinzufügt, die er von der Deformationskamera erhält und die Menge der Verformung auf dem Gaszylinder abmisst

## Revendications

1. Système de contrôle **caractérisé en ce que** il comprend au moins une ligne de convoyeur (3) sur laquelle se trouve des cylindres de gaz (2) produits, permettant le transport du gaz de pétrole liquéfié (LPG) et autres hydrocarbonés,
au moins une station de contrôle (4) où il est réalisé les tests de déformation et peinture sur les cylindres de gaz (2) produits et réalisés sur la ligne de convoyeur (3),
une unité de contrôle (5) comparée avec les standards où il a enregistrés au préalable dans sa mémoire les résultats de mesure du contrôle de peinture et de déformation sur la surface du cylindre de gaz (2),
au moins une ligne de séparation (6) de réparation et de rejet assurant la réparation de ceux réparables, la séparation au rejet de ceux qui sont irréparables, la séparation des autres du cylindre de gaz considéré endommagé selon les résultats assurés par le l'unité de contrôle (5),
au moins une ligne de séparation de peinture (7) assurant la communication des cylindres pour une peinture dans le cas où il n'y aura pas de conformité aux standards de peinture de la surface des cylindres de gaz selon les résultats assurés par le l'unité de contrôle (5),
au moins deux groupes de séparation (8) assurant l'envoi à la ligne de séparation de peinture (7) ou à la ligne de séparation de réparation (6) et au aussi rejet, des cylindres de gaz déterminés selon les résultats obtenus et liés à l'unité de contrôle (5),
un panel de contrôle utilisé par l'opérateur gérant et l'ordinateur et analysant les résultats de contrôle, visualisant les opérations suivies et un circuit de communication (9) permettant la communication entre l'unité de contrôle (5) et les groupes de séparations (8),
comprenant un mécanisme de rotation (41) réalisant les opérations de rotation et de tenu des cylindres de gaz (2) prenant place sur la ligne,
un laser (42) où la lumière est reflétée sur le cylindre (2) et poursuivant la surface du cylindre (2) lors de la rotation du cylindre de gaz (5) pour la détermination des déformations,
au moins une caméra de déformation (43) communicant à l'unité de contrôle (5) par l'intermédiaire du circuit de communication (9) les images et enregistrant les images du laser par de différents points lors de la rotation pour la décision à l'état de déformation,
au moins une caméra de peinture communicant à l'unité de contrôle (5) par l'intermédiaire du circuit (9) de communication (9) les images et enregistrant les images du laser par de différents points lors de la rotation pour la décision à l'état de peinture.

2. Système de contrôle (1) selon la revendication 1 **caractérisé en ce qu'**il comprend au moins un circuit de communication (9) assurant la communication entre la station de contrôle (4) et l'unité de contrôle (5).

3. Système de contrôle (1) selon une des revendication précédentes **caractérisé en ce que** le LED, le fluorescant, le fibre optique, la lumière halogène distribuée soient utilisable à la place du laser (42) dans la station de contrôle (4).

4. Système de contrôle (1) selon une des revendication précédentes **caractérisé en ce qu'**il comprend au moins un mécanisme de rotation (41) assurant l'enregistrement de toute la surface extérieure du cylindre de gaz (2) en agitant le groupe de laser caméra (42, 43, 44) en rotation lorsque le cylindre de gaz (2) agit d'une manière montée sur le convoyeur (3),

5. Système de contrôle (1) selon une des revendication précédentes **caractérisé en ce qu'**il comprend une unité de contrôle (5) mesurant la quantité de déformation sur le cylindre de gaz (2) et ajoutant des images obtenus consécutivement par la caméra de déformation.
